# FASCICULE DE BREVET EUROPEEN

(11) **EP 0 954 788 B1**
(45) Date de publication et mention de la délivrance du brevet: **10.10.2001**
(21) Numéro de dépôt: 98904235.3
(22) Date de dépôt: 28.01.1998
(51) Int. Cl.: G06F 11/34, H04L 12/24

(54) **PROCEDE DE MODELISATION D'UN SYSTEME D'INFORMATION ET SYSTEME METTANT EN OEUVRE CE PROCEDE**
VERFAHREN ZUR MODELLIERUNG EINES INFORMATIONSSYSTEMS UND SYSTEM ZUR DURCHFUEHRUNG DIESES VERFAHRENS
METHOD FOR MODELLING AN INFORMATION SYSTEM AND SYSTEM IMPLEMENTING THIS METHOD

(30) Priorité: 29.01.1997 FR 9700965
(43) Date de publication de la demande: 10.11.1999
(73) Titulaire: Infovista S.A., 91140 Villebon-sur-Yvette (FR)
(72) Inventeur: RIES, Alain, F-78350 Jouy-en-Josas (FR); MATHIEU, Loic, F-94230 Cachan (FR); STOPNICKI, Manuel, F-75011 Paris (FR)
(74) Mandataire: Pontet, Bernard
(86) Numéro de dépôt international: FR9800151
(87) Numéro de publication internationale: WO9833123

(56) Documents cités:
- EP-A- 0 549 504
- CATANIA V ET AL: "MONITORING PERFORMANCE IN DISTRIBUTED SYSTEMS" COMPUTER COMMUNICATIONS, vol. 19, no. 9/10, août 1996, pages 788-802, XP000626376
- SAMEH RABIE: "INTEGRATED NETWORK MANAGEMENT: TECHNOLOGIES AND IMPLEMENTATION EXPERIENCE" IEEE INFOCOM '92, FLORENCE, MAY 4 - 8, 1992, vol. 2 OF 3, 3 août 1992, INSTITUTE OF ELECTRICAL AND ELECTRONICS ENGINEERS, pages 1020-1027, XP000300237
- WIDL W: "CCITT STANDARDISATION OF TELECOMMUNICATIONS MANAGEMENT NETWORKS" ERICSSON REVIEW, vol. 68, no. 2, 1 janvier 1991, pages 34-51, XP000233163
- T.K. APOSTOLOPOULOS ET AL.: "A Model for SNMP Based Performance Management Services" PROCEEDINGS OF IEEE SINGAPORE INTERNATIONAL CONFERENCE ON NETWORKS/INTERNATIONAL CONFERENCEON INFORMATION ENGINEERING 1995, 3 juillet 1995 - 7 juillet 1997, SINGAPORE, pages 269-273, XP002041821
- YING-DAR LIN ET AL: "A FRAMEWORK FOR LEARNING AND INFERENCE IN NETWORK MANAGEMENT" GLOBECOM '92, COMMUNICATION FOR GLOBAL USERS, INCLUDING A COMMUNICATIONS THEORY MINI CONFERENCE ORLANDO, DEC. 6 - 9, 1992, vol. 1 - 2 - 03, 6 décembre 1992, INSTITUTE OF ELECTRICAL AND ELECTRONICS ENGINEERS, pages 560-564, XP000357845

## Description

La présente invention concerne un procédé de modélisation d'un système d'information, notamment en vue d'une mesure de performances et d'un suivi de la qualité de service. Elle vise également un système d'information décisionnel mettant en oeuvre ce procédé.

La complexité croissante des systèmes d'information qui intègrent notamment des architectures clients-serveurs et des réseaux locaux intégrés, rend de plus en plus difficile une mesure des performances et un suivi efficace de la qualité de service au sein de ces systèmes. D'une part, les administrateurs et responsables de ces systèmes d'information sont amenés à adopter une démarche de service à l'égard des utilisateurs et à opérer en tant que prestataires de service soucieux de la qualité des services fournis tout en étant confrontés à des réductions de coût d'exploitation, et d'autre part, les utilisateurs de ces services réclament des niveaux de qualité de service toujours plus élevés.

La maîtrise de la qualité de service implique un système fiable de remontée des informations pertinentes en provenance des différentes ressources du système d'information. Il est cependant ardu d'exploiter des gisements de données de performance de grand volume résidant dans les équipements d'un réseau, dans les systèmes et dans les applications logicielles, de consolider ces données, puis de les restituer sous forme de tableaux de bord synthétiques à des fins de gestion de capacité ou de qualité de service. Il est recherché, d'une part, une gestion de la qualité de service au niveau de l'utilisateur: disponibilité, temps de réponse applicatif, réactivité face à un incident d'un support technique, et d'autre part, une gestion de la qualité de service technique relative à l'infrastructure elle-même: trafic, temps de transit réseau, consommation en temps d'unité centrale, etc..

Il existe déjà des produits logiciels fournissant des informations de suivi de qualité de service au sein de systèmes d'information, tels que "TRENDsnmp+", édité par la compagnie DESKTALK Systems Inc., qui est constitué d'une ensemble d'application génériques pour la collecte de données, leur agrégation, la gestion et la génération de rapports et de tableaux de bord. Ce logiciel peut traiter des données provenant de tout équipement supportant le protocole SNMP (Simple Network Management Protocol), et inclut un support spécialisé pour le standard Remote Monitoring (RMON) MIB.

On connaît également le produit "Network Health" édité par la compagnie CONCORD. Ce produit consiste en une famille de solutions automatisées d'analyse de réseau et de génération de rapport.

Il existe également le produit "Perfagent" édité par la compagnie ACANTHE SOFTWARE. Ce produit est un générateur de tableaux de bord d'exploitation multi-plateformes pour un environnement SNMP. Il procure un suivi temps réel, un archivage d'Indicateurs en base de données relationnelles et une analyse en temps différé de l'état des composantes d'un réseau ou d'un système d'information.

Le produit "ISM statistics" édité par la compagnie BULL automatise la collecte, la gestion des données ainsi que l'édition de rapports pour la gestion statistique d'un système d'information. Les données collectées sont organisées autour de classes d'objets qui représentent les éléments réels du réseau. Pour chaque classe d'objet, ce produit fournit des données, appelées Indicateurs, représentatives de la charge ou de l'activité de chaque objet. Il procède au traitement des Indicateurs, notamment par synthèse ou filtrage. Les informations sont stockées dans une base de données relationnelle.

Le produit "Performance Reporter" édité par la compagnie IBM, fournit également un ensemble de tableaux de bord et de rapports en vue de gérer la qualité de service d'un système d'information, et supporte notamment le protocole SNMP. On peut également citer le produit de gestion de réseau "SPECTRUM" édité par la compagnie CABLETRON SYSTEMS Inc. Ce produit intègre notamment un module de gestion de la qualité de service à partir d'une modélisation inductive du réseau. Le document WO9626588 (Cabletron Systems) divulgue un procédé pour gérer des configurations d'un réseau comprenant un groupage d'au moins un élément de réseau pour constituer un groupe de réseau. Un identificateur est fourni pour chaque équipement de réseau et une base de données est modifiée pour contenir une relation entre équipement et un identificateur de groupe.

Le document US5459837 (Digital Equipment Corporation) divulgue un procédé et un système pour mesurer la performance de serveurs au sein d'un réseau.

Le document "Monitoring performance in distributed systems", paru dans COMPUTER COMMUNICATIONS, Vol.19, No.9/10, pages 788-802, Août 1996, divulgue un procédé de monitoring continu de systèmes distribués, mettant en oeuvre une approche orientée-objet pour la gestion des divers éléments d'un système distribué. Le modèle orienté-objet implémenté dans ce procédé utilise les concepts de classe et d'héritage.

Ce procédé prévoit la collecte de données relatives à une Instance sur celle-ci ou sur d'autres Instances, les données collectées étant rattachables à cette Instance via le modèle du système d'information. Par ailleurs, il y est défini des classes d'objets du système d'information, comprenant des Propriétés et/ou des Indicateurs.

Le document "Integrated network management: technologies and implementation experience", paru dans IEEE INFOCOM, Vol.2, pages 1020-1027, Août 1992, divulgue des scénarios de gestion de réseau intégrée mettant en oeuvre une modélisation orientée-objet des composants physiques et logiques du réseau et de leurs données associées. Le modèle utilisé comprend deux types de relations entre objets: une relation "parent" pour notifier à un composant l'état de ses "enfants", et une relation de dépendance qui est utilisée pour déduire l'état d'un objet à partir de ses composants supports.

Le document "CCITT standardisation of telecommunications management networks", paru dans ERICSSON REVIEW, Vol.68, No.2, pages 34-51, Janvier 1991, présente des travaux de standardisation CCITT de systèmes de gestion de réseau incluant une approche orientée-objet. Chaque objet géré appartient à une classe qui peut être une sous-classe d'une autre classe. La sous-classe hérite de toutes les propriétés de la classe dont elle dépend. Les différentes classes répondent à une hiérarchie d'héritage.

Or, pour procurer une mesure efficace des performances et un suivi de la qualité de service de systèmes toujours plus complexes, il est nécessaire de réaliser une modélisation globale du système d'information qui puisse conduire à une homogénéisation des objets de ce système d'information et des données collectées.

Le but de la présente invention est de proposer un procédé de modélisation d'un système d'information, en vue de la mesure des performances et du suivi de la qualité de service au sein d'un système d'information, qui puisse atteindre cet objectif.

Celui-ci est atteint avec un procédé pour modéliser un système d'information, en vue d'une mesure des performances et d'un suivi de la qualité de service de ce système d'information, ce procédé comprenant une modélisation orientée-objet de ce système d'information, chaque élément dudit système d'information étant représenté par une Instance, dans lequel:
- des données relatives à une première Instance sont collectées sur cette Instance ou sur une ou plusieurs autres Instances,
- ces données collectées sont rattachables à cette première Instance via le modèle du système d'information,
- on définit des classes d'objets du système d'information appelées Vistas, chaque Vista comprenant des Propriétés et/ou des Indicateurs, les Instances du système d'information appartenant à une ou plusieurs de ces Vistas.

Suivant l'invention, le procédé comprend en outre des règles modifiables définissant des héritages entre différentes Vistas.

On réalise ainsi, lorsque c'est nécessaire, une décorrélation entre l'Instance à laquelle seront rattachées des données la concernant et la ou les Instances sur lesquelles vont effectivement être collectées les données.

A titre d'exemples, trois cas permettent de mettre en oeuvre cette décorrélation:
- les informations relatives à la charge unité centrale d'un serveur seront collectées directement sur ce serveur (pas de décorrélation);
- on souhaite connaître le temps de réponse moyen sur des requêtes SQL sur une base de données relationnelle: on interroge des sondes du réseau qui vont déterminer le temps écoulé entre les requêtes et les réponses de cette base de données; dans ce cas, on interroge des sondes mais pas la base de données relationnelle. Pourtant les données collectées vont être rattachées à la base de données relationnelle;
- on souhaite obtenir la disponibilité d'un site géographique: on interroge les équipements de ce site pour mesurer leur disponibilité individuelle, et en déduire la disponibilité du site. Le résultat est rattaché à l'objet "Site".

Cette décorrélation, sans équivalent dans les procédés de modélisation de l'art antérieur, a notamment pour effet de permettre un haut niveau de flexibilité dans la prise en compte de sources de données diverses et hétérogènes. Par ailleurs, elle permet que les différents processus d'acquisition, de calcul et de stockage soient intégralement conduits dans une approche orientée-objet.

La modélisation orientée-objet du système d'information comprend, dans une forme préférée de mise en oeuvre du procédé de modélisation selon l'invention, une modélisation de l'infrastructure du système d'information, une modélisation des données collectées sous forme d'indicateurs calculés à partir de variables représentant des données élémentaires collectées au sein de ce système d'information, et une modélisation de rapports à générer.

Il s'agit bien, avec le procédé de modélisation selon l'invention, d'une modélisation orientée-objet intégrant, au delà de la seule modélisation des éléments de l'infrastructure du système d'information, également une modélisation des données collectées et des résultats du traitement de ces données, quelles que soit la nature de ces données.

De préférence, les objets traités et générés sont tous stockés dans une base de données objet, accessible pour toute consultation ultérieure.

Avec le procédé selon l'invention, il devient possible de visualiser les informations de qualité de service sous un angle opérationnel, géographique, technique ou commercial. Ce procédé permet de fournir des tableaux de bord synthétiques de performances et de coûts, en conservant un historique de l'activité et des écarts par rapport à des objectifs de service sur une période donnée et sur un périmètre défini. Ces tableaux de bord permettent de contrôler la qualité de service fournie aux utilisateurs, d'anticiper les dérives et de prendre les décisions nécessaires afin de garantir et de respecter les engagements de service. Un responsable de systèmes ou de réseaux peut également suivre sur une longue période ou en temps réel, des Indicateurs techniques portant sur les objets du système d'information gérés par le procédé selon l'invention: serveurs, équipements de réseau et de télécommunication, applications spécifiques ou progiciels, etc..

Dans une forme préférée de mise en oeuvre du procédé selon l'invention, un Indicateur contient une pluralité de Formules combinant chacune un ensemble de Variables, et le processus de traitement comprend, pour chaque Indicateur demandé dans un rapport, un choix dynamique d'une Formule parmi la pluralité de Formules associées à cet Indicateur, ce choix étant notamment déterminé en fonction de la disponibilité respective des variables requises par chacune desdites Formules dans la source de données utilisée et en fonction des priorités attribuées à chacune des Formules.

Le procédé de modélisation selon l'invention peut également inclure de façon avantageuse des techniques d' "entrepôt de données" (data warehousing), notamment pour conserver un historique de toutes les informations collectées. Il prend en compte et mémorise les évolutions (ajouts, suppressions, modifications d'objets) du système d'information, et les répercute automatiquement dans les tableaux de bord concernés. Ainsi, la consultation d'un tableau de bord portant sur une période passée ne prend en compte que les objets du système d'information présents à ce moment là et non ceux définis au moment de la consultation du tableau de bord.

Le procédé de modélisation selon l'invention peut avantageusement être mis en oeuvre au sein d'un procédé de mesure des performances et de suivi de la qualité de service d'un système d'information dans lequel on homogénéise les trois types de sources de données suivantes:
1) des données acquises par polling en temps réel,
2) des données, notamment des données continues ou discrètes (événements), acquises en temps réel en provenance d'une source externe,
3) des données, notamment des données continues ou discrètes (événements), acquises en temps différé en provenance d'une source externe qui fournit au serveur l'historique des variables sous forme de liste de données horodatée.

Un mode d'implémentation pratique consiste à réaliser cette homogénéisation sous la forme d'une étape, dite d'abstraction de polling, pour regrouper des données acquises en temps réel en provenance de diverses sources de données (types 1 et 2), et d'une étape, dite d'abstraction d'acquisition, pour homogénéiser (i): des données en temps réel issues de l'étape d'abstraction de poLling et (ii): des données acquises en temps différé type 3).

Ces données homogénéisées sont représentées par des objets rattachés aux objets issus de la modélisation du système d'information et concernés par ces données.

On entend par polling un mécanisme par lequel un processus maître (serveur) interroge régulièrement un processus agent local ou distant afin de le solliciter, par exemple pour un envoi de données.

L'acquisition de données en provenance d'une source externe se distingue du polling en ce que, dans ce cas, le serveur ne contrôle pas les instants d'arrivée des données en provenance de cette source externe.

Suivant un autre aspect de l'invention, il est proposé un système de mesure des performances et de suivi de la qualité de service d'un système d'information distribué, mettant en oeuvre le procédé de modélisation selon l'invention, ce système comprenant:
- des moyens pour réaliser une modélisation orientée-objet du système d'information, chaque élément dudit système d'information étant représenté par une Instance, ces moyens de modélisation orientée-objet étant agencés pour définir des classes d'objets du système d'information appelées Vistas,
- des moyens pour modéliser et collecter des données au sein du système d'information, ces données provenant de diverses sources de données,
- des moyens pour traiter les données collectées et pour calculer des Indicateurs, notamment de qualité de service, et
- des moyens pour générer des rapports et/ou graphes à partir de ces Indicateurs.

Suivant l'invention telle que définie dans les présentes revendications les moyens de modélisation orientée-objet sont en outre agencés pour générer des règles modifiables définissant des héritages entre différentes Vistas.

Le document COMPUTER COMMUNICATIONS, vol. 19, No. 9/10, août 1996, pages 788-802, Catania V et al., intitulé "Monitoring performance in distributed systems" définit un procédé de modélisation d'un système d'information, de type modélisation orientée-objet, tel que défini dans le préambule de la revendication 1.

D'autres particularités et avantages de l'invention apparaîtront encore dans la description ci-après. Aux dessins annexés donnés à titre d'exemples non limitatifs:
- la figure 1 représente schématiquement un système d'information pour lequel le procédé de modélisation selon l'invention est mis en oeuvre;
- la figure 2 représente schématiquement les interactions entre un procédé de mesure des performances et de suivi de qualité mettant en oeuvre le procédé de modélisation selon l'invention, et un système d'information;
- la figure 3 représente un exemple de fenêtre utilisée dans un logiciel mettant en oeuvre le procédé selon l'invention;
- les figures 4A, 4B, et 4C représentent schématiquement des relations concernant les Instances, les Groupes et les Indicateurs;
- la figure 5 est un schéma-bloc explicitant une structuration possible des Indicateurs mis en oeuvre dans le procédé selon l'invention;
- la figure 6 est un schéma-bloc explicitant la structure des "slots" de données au sein d'une mise en oeuvre pratique du procédé selon l'invention;
- la figure 7 est un diagramme illustrant un mécanisme de modélisation de rapports au sein du procédé selon l'invention; et
- la figure 8 est une copie d'écran d'une représentation à plat d'une structure de MIB.

On va tout d'abord préciser un ensemble de définitions et de concepts qui seront utilisés tout au long de la présente description.

Le système d'information est composé d'éléments ou instances (équipements réseaux, systèmes,...). Une instance appartient à un ou plusieurs classes d'objet. Chaque classe d'objet a un certain nombre d'attributs ou propriétés qui définissent l'objet.

Le modèle peut être divisé en trois domaines:
- le modèle de l'infrastructure du système d'information (réseaux, systèmes et applications),
- le modèle des données collectées et des Indicateurs,
- le modèle des rapports qui seront générés.

Les objets du procédé selon l'invention sont utilisés pour modéliser ces domaines.

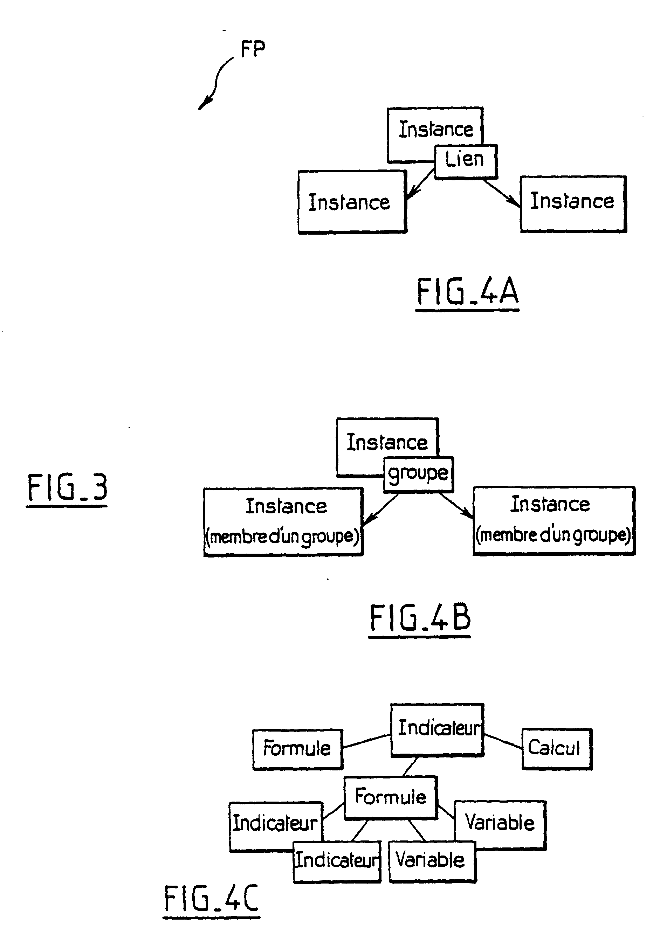

On va maintenir décrire les aspects principaux d'une modélisation mise en oeuvre dans le procédé selon l'invention. Un élément géré dans le système d'information est représenté par une Instance. Des Instances peuvent être reliées par des liens (Figure 4A) et être membres d'un groupe (Figure 48). Un élément géré possède plusieurs attributs appelés valeurs de Propriété. L'élément géré peut avoir plusieurs caractéristiques qui sont chacune définies par une Vista. La Vista définit quelles Propriétés l'Instance doit avoir.

L'objet Vista représente une facette, une catégorie à laquelle un élément peut appartenir, ou caractéristique fondamentale d'un élément. Il indique les propriété de cette facette.

Chaque élément du système d'information appartient à une ou plusieurs Vistas. Les Vistas peuvent être modifiées par des règles. Chaque règle est représentée par un objet Règle. Cet objet permet de définir des relations entre Vistas. Ainsi, une règle permet de définir que l'appartenance pour une Instance à une Vista donnée entraîne automatiquement son appartenance à une autre Vista. Ainsi, n'importe quelle Vista peut hériter d'une autre Vista à la fois de ses propriétés et de ses indicateurs. A la différence des conceptions objet où l'héritage est défini de manière fixe, dans la présente invention, les règles permettent de définir les héritages entre les différentes Vistas. Ceci permet une grande souplesse de définition des objets et classes d'objet d'un système d'information. A titre d'exemple, si on considère les trois Vistas suivantes, 1) une Vista Noeuds IP constituée de tous les éléments du réseau ou système d'information ayant une adresse IP, 2) une Vista Noeuds IPX constituée de tous les éléments du réseau ou du système d'information ayant une adresse IPX, 3) une Vista Routeur constituée de tous les équipements du système d'information ayant une fonction de routage de données. Suivant les cas, le Routeur peut être configuré pour router du protocole IP. Dans ce cas, une règle spécifiera que la règle Vista héritera de la Vista Noeuds IP. Dans un autre cas, le Routeur sera configuré pour router du protocole IPX. Dans ce cas, la règle spécifiera que la Vista Routeur hérite de la Vista IPX. Enfin, dans un dernier cas, le Routeur pourra être configuré pour router les protocoles IP et IPX. Dans ce cas, deux règles spécifieront que la Vista Routeur héritera à la fois de la Vista Noeuds IP et de la Vista Noeuds IPX.

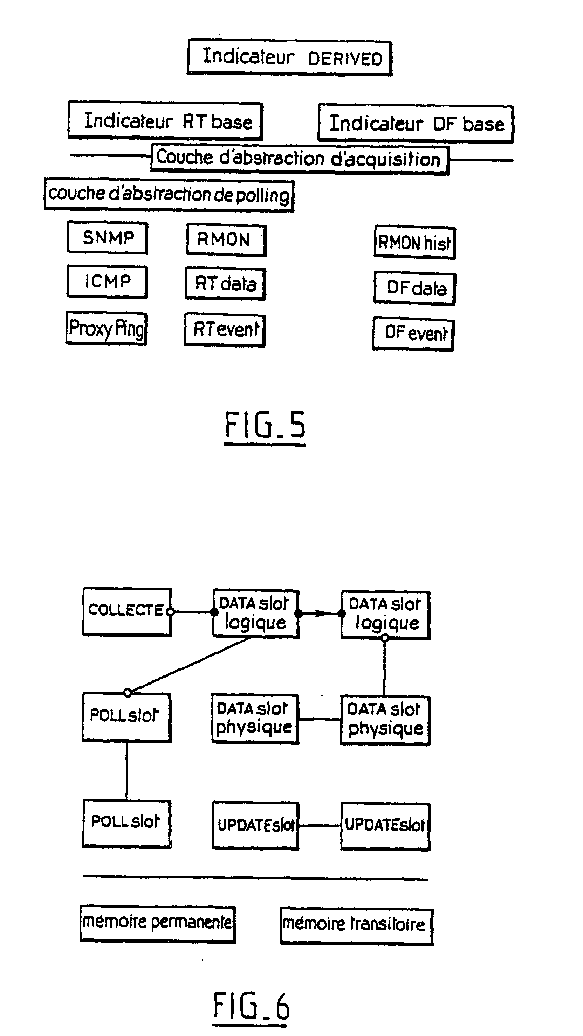

On va maintenant décrire des aspects principaux de la modélisation des Indicateurs. Chaque Indicateur est représenté par un objet Indicateur (Figure 5). A titre d'exemple, un Indicateur peut être "disponibilité" ou "qualité de service". Un Indicateur est calculé à partir de plusieurs variables ou de plusieurs autres Indicateurs, en utilisant une Formule choisie parmi plusieurs Formules. Le procédé selon l'invention traite deux types de variables:
- des variables temps réel,
- des variables en temps différé.

Un Indicateur calculé directement à partir de variables est appelé Indicateur de base (RTbase pour un Indicateur en temps réel ou DFbase pour un Indicateur en temps différé), tandis qu'un Indicateur calculé à partir d'autres Indicateurs est appelé Indicateur dérivé.

On notera bien qu'il est possible de masquer à l'utilisateur cette différence entre Indicateurs de base et Indicateurs dérivés, en laissant au système la détermination automatique du type.

Les Indicateurs sont ainsi classés en trois catégories:
- les Indicateurs RTbase sont des fonctions de variables à acquisition en temps réel. Lorsque le serveur souhaite calculer la valeur d'un tel Indicateur à un instant donné, il demande les valeurs des différentes variables nécessaires au même instant puis effectue le calcul;
- les Indicateurs DFbase sont des fonctions de variables à acquisition en temps différé. Lorsque le serveur reçoit l'historique des variables, il met à jour les Indicateurs correspondants.
   Après réception et traitement des variables, plus rien ne doit distinguer les données stockées au niveau d'un Indicateur DFbase de celles stockées au niveau d'un Indicateur RTbase; c'est à dire que plus rien ne doit indiquer que les variables n'ont pas été acquises en temps réel;
- les Indicateurs dérivés (DERIVED) sont des fonctions d'autres Indicateurs (indifféremment RTbase, DFbase et DERIVED). Leur évaluation s'effectue par un méçanisme de propagation: le serveur déclenche l'évaluation d'un Indicateur dérivé (DERIVED) dès lors que les valeurs des Indicateurs le constituant sont disponibles.

Les Indicateurs dérivés (DERIVED) enrichissent les possibilités du serveur en permettant notamment:
- l'utilisation de fonctions d'agrégation multi-Instances,
- l'utilisation au sein d'une même formule d'Indicateurs RTbase et DFbase,
- l'utilisation de fonctions basées sur l'historique des données, ce que ne peuvent proposer les Indicateurs RTbase et DFbase car ils sont construits à partir des variables qui n'intègrent pas la notion d'historique.

On peut aussi associer un calendrier à un Indicateur. L'objet Calendrier spécifie les périodes de temps dans lesquelles les données de l'Indicateur sont signifiantes. Une optimisation consiste à ne pas collecter des données quand celles-ci ne sont pas signifiantes.

Le type d'un Indicateur est déduit de celui des variables ou Indicateurs qui le composent en appliquant les règles de combinaison des types par les opérateurs.

Pour un Indicateur dérivé (DERIVED), il est possible d'indiquer que l'on ne souhaite pas conserver les valeurs. Chaque demande de valeur pour l'Indicateur entraîne alors un recalcul. On peut ainsi éviter de stocker un Indicateur qui se déduit facilement d'un autre, par exemple à l'aide de l'opérateur de décalage temporel offset. Ceci permet à l'utilisateur d'arbitrer lui-même un compromis entre le volume de stockage et le temps de calcul.

La définition de chaque Indicateur comprend un délai maximal d'obtention des données. Ce délai est nul pour un Indicateur RTbase, fixé par l'utilisateur pour un Indicateur DFbase et calculé pour un Indicateur dérivé (DERIVED). L'utilisateur peut alors arbitrer lui-même entre le volume de stockage nécessaire et le délai de disponibilité des données accordé pour les variables à acquisition différée.

Le calcul d'un Indicateur consolidable sur une période de temps donnée s'effectue en partant des données de base collectées en temps réel, en calculant l'Indicateur puis en consolidant (par moyenne) le résultat obtenu. Le calcul d'un Indicateur non consolidable s'effectue en consolidant d'abord (par moyenne) les données de base puis en calculant l'Indicateur.

Les formules mathématiques utilisées pour calculer un Indicateur sont des expressions. Une expression peut contenir:
- des Indicateurs,
- des Variables scalaires ou multidimensionnelles,
- des Paramètres de ces variables ou Indicateurs, notamment leur dimension,
- des Propriétés,
- des Opérateurs,
- des Constantes,
- du texte
- des retours chariot.

S'agissant des opérateurs, on peut citer, outre les opérateurs arithmétiques addition, soustraction, multiplication et division: +,-, X et /, des opérateurs spécifiques tels que des opérateurs de réduction, des opérateurs de conversion et des opérateurs temporels.

Les opérateurs de réduction permettent de réduire la dimension d'une ou plusieurs expressions, par exemple, la valeur moyenne d'un Indicateur sur un groupe d'Instances, ou le minimum et le maximum.

Les opérateurs de conversion permettent de changer le type d'une expression, par exemple la conversion d'un entier en un flottant.

Les opérateurs temporels permettent d'accéder à la dimension "temps" des valeurs. Ils n'opèrent que sur des Indicateurs. Par exemple, l'opérateur BaselineDay [Indicateur, n] génère un graphe " profil journalier " ("daily Baseline") consolidé sur un ensemble de n jours. Un graphe "profil journalier" est un graphe de référence illustrant le profil moyen ou profil type d'un Indicateur sur une journée. Il est calculé en moyennant les données collectées sur n jours successifs.

Un opérateur **select** permet de réaliser un test d'expression. Si le test est vrai, la valeur de l'expression retournée par l'opérateur **sélect** est celle de la première expression de la liste d'arguments et sinon la valeur est celle de la deuxième expression. Un opérateur **merge** permet de créer des paramètres composites. Il fusionne les valeurs d'une expression avec le paramètre d'une autre, afin de créer un paramètre composite. Les paramètres des deux expressions doivent être identiques.

Les Indicateurs peuvent être groupés à titre d'exemple dans des ensembles appelés Métriques. Chaque Métrique peut être représentée par un graphe ou diagramme. Les diagrammes peuvent être regroupés en tableaux de bord.

On va maintenant décrire le procédé de mesure de performances dans lequel est mis en oeuvre le procédé de modélisation selon l'invention à la fois sous l'angle matériel et sous l'angle logiciel, en référence aux figures précitées.

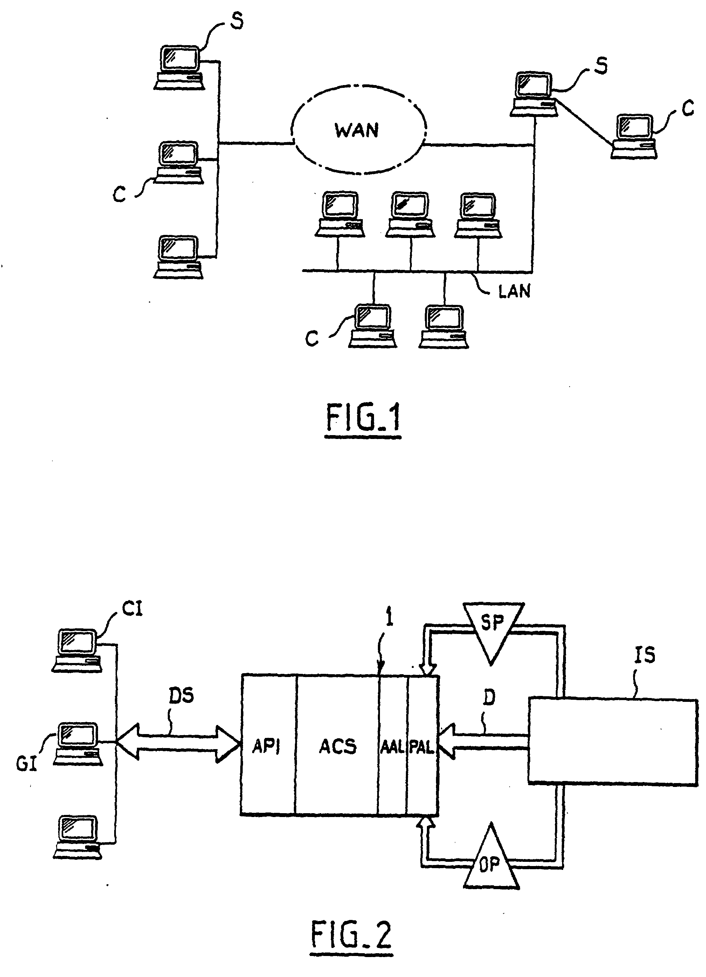

Le procédé de modélisation selon l'invention peut en pratique être implémenté sous la forme de briques logicielles au sein d'un progiciel installé sur un serveur S connecté à un réseau local LAN, et sur des postes clients C locaux ou distants (WAN) en réseau, en référence à la figure 1.

Le procédé de modélisation selon l'invention peut par exemple être mis en oeuvre dans un procédé de mesure et de suivi présentant une structure logicielle 1 en relation d'une part avec un système d'information IS sur lequel vont être prélevées des données D, et d'autre part, avec des postes interfaces utilisateurs clients CI, et des postes graphiques GI, en référence à la figure 2. Les protocoles de transfert de données provenant du système d'information IS comprennent, soit des protocoles standards SP tels que les protocoles SNMP ou CMIP, soit d'autres protocoles OP. Les échanges de données entre les postes clients et le procédé de mesure et de suivi sont réalisés par exemple selon le mode de transfert standard DCE.

La structure interne 1 du procédé de mesure et de suivi comprend, à titre d'exemple non limitatif, une première couche d'abstraction de polling PAL (Polling Abstraction Layer), une seconde couche d'abstraction d'acquisition AAL (Acquisition Abstraction Layer) , une couche d'acquisition de calcul et de stockage ACS, et une couche interface API avec les postes utilisateurs. Les fonctions d'acquisition, de calcul et de stockage constituent le coeur du serveur utilisé dans le système selon l'invention. Elles sont décrites au moyen d'un modèle statique et d'un modèle dynamique. Le modèle statique est constitué d'un ensemble de structures décrivant les données que l'on souhaite obtenir. Le modèle dynamique est constitué d'un ensemble de structures et de tâches destinées à obtenir ces données. Le modèle statique s'appuie sur deux concepts fondamentaux que sont les Variables et les Indicateurs.

Le logiciel mettant en oeuvre le procédé selon l'invention, étant client-serveur, peut donc être distribué sur un ou plusieurs réseaux. Des serveurs peuvent être installés en un ou plusieurs points d'un réseau pour assurer les acquisition de données, le traitement et le stockage. Des machines Client peuvent être installées en divers points géographiques en fonction des besoins. De cette façon, les gestionnaires des systèmes d'information et les décideurs peuvent mettre en oeuvre un procédé de mesure de performances et de suivi de qualité mettant en oeuvre le procédé selon l'invention depuis leurs propres bureaux pour préparer des rapports. Les Clients et le Serveur communiquent par exemple par le standard de communication DCE qui permet d'assurer une intéropérabilité sur des plates-formes hétérogènes. De plus, au fur et à mesure de l'évolution du système d'information, l'architecture client-serveur permet un dialogue entre client et serveurs fonctionnant sur des systèmes d'exploitation différents.

On va maintenant décrire un mode particulier de réalisation d'un processus d'homogénéisation des données mis en oeuvre avec le procédé de modélisation selon l'invention. Dans un serveur mettant en oeuvre le procédé de modélisation selon l'invention au sein d'un procédé de mesure et de suivi, les données collectées, envoyées au moyen d'un protocole ou en provenance de sources de données extérieures en temps réel ou en temps différé, traversent deux couches d'abstraction. Une première couche, appelée couche d'abstraction de polling (PAL: "Polling Abstraction Layer"), crée une source de données unique pour des données en temps réel soit acquises par polling, soit en provenance d'une source de données externe, indépendamment des protocoles d'origine. La seconde couche, appelée couche d'abstraction d'acquisition (AAL: "Acquisition Abstraction Layer"), assemble ces données en temps réel et les données en temps différé en provenance d'une source externe, avant leur traitement. La fonction des couches d'abstraction est de masquer les différences entre les types de données supportées par le procédé de mesure et de suivi. Le processeur de traitement n'a alors à traiter qu'un seul type de données. Une fois que les données ont traversé les deux couches d'abstraction, on obtient des Variables homogènes, quelle que soit leur provenance.

Le logiciel installé sur les postes Clients mettant en oeuvre le procédé selon l'invention a deux fonctions: la gestion du modèle du système d'information, et la conception et la visualisation des rapports. Pour effectuer la gestion du système d'information et préparer les rapports, on a prévu deux interfaces Client: une interface ligne de commande et une interface graphique.

Après mise en route du logiciel dans lequel est implémenté le procédé selon l'invention, une fenêtre principale FP est visualisée, en référence à la figure 3. Cette fenêtre procure une vue globale du modèle du système d'information sous la forme d'une structure arborescente. La racine de l'arborescence représente le serveur auquel on est connecté. Les objets dans le modèle sont organisés en groupes logiques représentés chacun par des branches de la structure arborescente. Ainsi, les objets Vistas incluent, à titre d'exemple non limitatif:
- application,
- équipement IP,
- équipement IPX,
- réseau,
- équipement SNMP,
- segment,
- site.

D'autres branches de l'arborescence correspondent aux objets suivants:
- Rapports,
- Calendriers,
- Collecteurs,
- MIBs (Management Information Base: Structure des informations disponibles sur les sources de données),
- Utilisateurs.

A chaque groupe d'objets, par exemple les Segments, sont associées des sous-branches correspondant aux objets suivants:
- Propriétés,
- Instances,
- Indicateurs, et
- Métriques.

Le serveur mettant en oeuvre un procédé de mesure et de suivi incluant le procédé selon l'invention assure deux fonctions. Une première fonction consiste à maintenir à jour un modèle de l'infrastructure du système d'information. A chaque fois que des composants sont ajoutés, supprimés ou modifiés, le serveur met à jour automatiquement le modèle du système d'information et conserve une trace des changements. Une seconde fonction consiste à convertir les demandes des utilisateurs (lancements de tableaux de bord) en un planning d'acquisition de données. Des Indicateurs sont ensuite calculés en fonction des demandes de l'utilisateur. Le serveur a également en charge l'horodatage et le stockage des données en fonction des besoins exprimés par les utilisateurs dans leurs requêtes.

Les requêtes des utilisateurs peuvent être considérées comme des fenêtres qui fournissent aux utilisateurs une vue partielle de l'information stockée par le serveur. L'information contenue dans les requêtes des utilisateurs est optimisée par le serveur. La forme optimisée contient des paires Instance-Indicateur et une information de temps. Toutes les informations redondantes sont détruites.

Une fois que les données ont été reçues par le serveur, les processus de consolidation, d'agrégation et de calcul commencent. Les données entrantes sont converties en Variables, qui servent ensuite à calculer des Indicateurs. Ces Indicateurs sont à leur tour utilisés comme base de calculs ultérieurs, par exemple d'autres Indicateurs. Des expressions et des opérateurs sont appliqués aux Variables et/ou aux Indicateurs. Les résultats sont ensuite consolidés et agrégés pour satisfaire les requêtes envoyées par les utilisateurs. Toutes les données demandées stockées par le serveur sont potentiellement disponibles. Si, dans une étape ultérieure, les utilisateurs souhaitent obtenir des données sur une plus longue période ou comparer des niveaux de performance de composant, il leur suffit simplement d'indiquer ce qu'ils souhaitent visualiser via leurs fenêtres de demande. Le serveur fera alors appel à des techniques de consolidation et d'agrégation pour analyser les données stockées, et ne visualisera que les données présentant un intérêt pour l'utilisateur.

La transformation des données en Indicateurs puis leurs représentations sous forme de graphes et de rapports comprend trois phases principales: l'acquisition de données, le calcul et le stockage.

Les données en temps réel (RT input) et en temps différé (DF input) sont reçues par le serveur. Dans une forme pratique de mise en oeuvre du procédé selon l'invention, les modes d'acquisition de données en temps réel publics (SNMP, Rmon, Rmon2, ProxyPing, ICMP) et propriétaires (RTdata pour les sources de données externes continues en temps réel, RTevent pour les sources de données externes discrètes) sont supportés.

Les modes d'acquisition de données en temps différé publics (RmonHistory) et propriétaires (DFdata pour le sources de données externes continues en temps différé, et DFevent pour les sources de données discrètes en temps différé) sont supportés.

On entend par ProxyPing un mode d'acquisition de données par lequel un processus maître, plutôt que d'envoyer directement un paquet ECHO (Ping ou ICMP) à une destination, demande à une entité tierce (Proxy) de réaliser cette opération pour son compte et de lui renvoyer le résultat.

La couche d'abstraction de polling PAL a pour fonction de regrouper les données en provenance de toutes ces sources. La couche d'abstraction d'acquisition AAL convertit les données en temps réel et en temps différé en Indicateurs.

Un Indicateur peut contenir plus d'une Formule (Figure 4C). On va maintenant décrire une manière de choisir parmi une pluralité de formules la formule à retenir. On peut prévoir que le serveur réalise une présélection de formules en fonction de la nature des Vistas auxquelles appartient cette Instance. Ensuite, le serveur vérifie que les données requises par les formules restantes sont disponibles pour calculer l'Indicateur. Si cette donnée est une Variable, le serveur interroge l'Instance pour voir si la Variable est disponible. Si elle est disponible, la Formule est considérée comme valide et sera alors utilisée dans les calculs suivants. Si la Formule n'est pas valide, le serveur essaiera d'appliquer une autre Formule de l'Indicateur jusqu'à ce qu'il en trouve une qui satisfasse les exigences. En cas de pluralité de Formules satisfaisant ces exigences, les priorités associées aux Formules décideront de la Formule à retenir. A nouveau, si une Formule valide est trouvée, elle sera conservée pour un usage ultérieur. La Formule valide sera utilisée automatiquement aussi longtemps qu'aucune modification n'est faite sur l'Indicateur. Si une Formule est ajoutée ou modifiée, toutes les Formules dans l'Indicateur sont réexaminées. Il est à noter que ce processus est transparent pour l'utilisateur. Le processus peut prendre en compte en temps réel et automatiquement toute modification, ajout ou suppression d'un élément du système d'information.

A titre d'exemple, l'Indicateur "Charge unité centrale" doit être calculé avec différentes Formules pour différents types d'équipements. Dans le cas d'une évolution du système d'information, le procédé selon l'invention prend en compte cette évolution, met à jour le modèle et applique différentes Formules et Instances au cours des calculs. Ceci est réalisé automatiquement et de façon transparente pour les utilisateurs.

Le serveur commence le calcul dès qu'il reçoit les informations nécessaires. Les Indicateurs RTbase et DFbase sont calculés lorsque les données en temps réel sont reçues. Pour les Indicateurs dérivés, le serveur conserve les données entrantes et retarde le calcul jusqu'à ce que toutes les données requises aient été reçues. Par ailleurs, les Indicateurs dérivés sont eux-mêmes calculés à partir d'autres Indicateurs (RTbase, DFbase ou même DERIVED). Les Indicateurs sont calculés à partir des Formules. Les Variables sont spécifiées dans une base d'information de gestion (MIB).

Les Variables et Indicateurs traités peuvent être des scalaires mais aussi et surtout des matrices multidimensionnelles. Les dimensions de ces matrices sont des objets du modèle, par exemple, des groupes d'objets ou des sous-objets non modélisés mais implicites, par exemple, les interfaces physiques multiples d'un équipement de transmission de données.

Les opérations sur ces matrices multidimensionnelles sont réalisées suivant le principe des tableaux associatifs, ce qui contribue à une forme de généricité au niveau des indicateurs.

Le mécanisme de stockage de données mis en oeuvre dans le procédé de mesure et de suivi incluant le procédé de modélisation selon l'invention est entièrement dynamique. Les données sont stockées dans des registres circulaires alloués à chaque paire Indicateur/Instance.

Les modifications apportées au modèle du système d'information sont stockées sous la forme d'objets *History.* Ces objets sont créés lorsque des Instances sont ajoutées ou supprimées d'une Collecte. Des objets History sont également créés à chaque fois qu'une Instance est ajoutée ou supprimée d'un Groupe d'Instances.

Les collectes sont l'expression directe des demandes de polling des utilisateurs. Une collecte comprend une liste d'Indicateurs, une liste d'Instances, un intervalle de polling, un intervalle de stockage et un nombre d'échantillons.

Le processus de collecte de données est réalisé sous le contrôle d'un objet Collecteur qui contient une liste des besoins de l'utilisateur pour le Graphe (Indicateurs à visualiser, Instances à surveiller, fréquence de visualisation, fréquence d'acquisition et nombre d'échantillons). Il contient les informations nécessaires pour la collecte des données pour un Graphe. Le Collecteur est en général créé par le système de façon automatique.

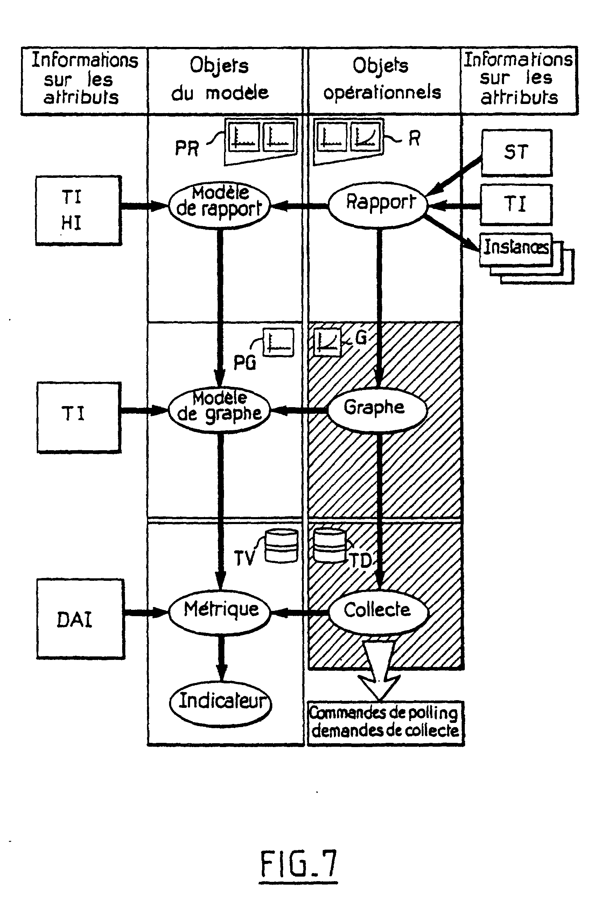

La modélisation d'un rapport fait appel, d'une part, à des objets de modélisation et, d'autre part, à des objets opérationnels, en référence à la figure 7. L'objectif est d'obtenir des modèles de rapport génériques indépendants des Instances mais ne dépendant que de la nature des Vistas auxquelles appartiennent ces Instances. Ainsi, un modèle de rapport valable pour une ou plusieurs Vistas sera applicable à toutes Instances de cette ou ces Vistas.

On va maintenant décrire, à titre d'exemple non limitatif, un mode de réalisation du modèle dynamique mis en oeuvre dans le procédé de modélisation selon l'invention.

Le modèle dynamique s'appuie sur cinq concepts fondamentaux que sont les collectes définies précédemment, les DATAslots logiques, les DATAslots physiques, les POLLslots et les UPDATEslots, en référence à la figure 6.

Les DATAslots logiques sont une traduction simplifiée et optimisée par élimination des demandes redondantes des collectes comprenant un Indicateur, une Instance, un intervalle de stockage et un nombre d'échantillons. Les DATAslots logiques sont liés par des relations orientées qui guident les flux de données impliqués dans la consolidation des Indicateurs et l'évaluation des Indicateurs dérivés (DERIVED). Certains DATAslots logiques constituent des points d'entrée pour les données externes (Indicateurs RTbase et DFbase) et sont utilisées exclusivement comme points de départ pour les relations. Ils sont les seuls à comprendre une fréquence de polling optimisée par élimination des demandes redondantes.

Les DATAslots physiques correspondent au stockage des données dont l'acquisition et le calcul sont contrôlés par les DATAslots logiques.

Les POLLslots sont associés aux DATAslots logiques qui sont des points d'entrée. Ils sont impliqués dans les opérations liées au polling:
- planification, en intégrant la gestion des calendriers,
- optimisations avancées au niveau des variables entre plusieurs Indicateurs,
- envoi de requêtes élémentaires vers les différentes sources de données,
- attente des données, gestion des timeouts, des retransmissions et du réassemblage,
- propagation des données et évaluations sous le contrôle des DATAslots logiques, et
- contrôle de flux pour la gestion de pollings dépassant les capacités du serveur.

Les UPDATEslots sont utilisés comme points de passage centralisés des données collectées avant calcul et stockage. Ils permettent un contrôle de flux aval venant en complément de celui réalisé en amont au niveau des POLLslots.

Pour un Indicateur dérivé (DERIVED), il est possible d'indiquer que l'on ne souhaite pas conserver les valeurs. Chaque demande de valeur pour l'Indicateur entraîne alors un recalcul. On peut ainsi éviter de stocker un Indicateur qui se déduit facilement d'un autre, par exemple à l'aide de l'opérateur de décalage temporel offset. Cela permet à l'utilisateur d'arbitrer lui-même le compromis entre le volume de stockage et le temps de calcul.

Tout Indicateur peut imposer un intervalle de polling minimal et/ou maximal, et par extension un intervalle d'affichage minimal, par exemple égal à l'intervalle de polling minimal. Cela ne dépend pas de l'utilisateur mais:
- des propriétés de certains opérateurs qui en introduisant la notion d'intervalle de consolidation imposent une limite supérieure sur l'intervalle de polling, par exemple l'opérateur **maxt** qui calcule l'instant auquel une variable atteint son maximum sur un intervalle de temps donné;
- de l'utilisation de la gestion calendaire qui impose à l'intervalle de polling de rester inférieur à la résolution du calendrier utilisé;
- des Indicateurs composant un Indicateur dérivé (DERIVED) qui propagent les contraintes existant à leur niveau;
- des propriétés des variables de certains protocoles (ICMP, ProxyPing) qui imposent un intervalle de polling minimal. En effet, dans le cas du ProxyPing, l'intervalle de polling doit être supérieur à la durée de réalisation de l'opération demandée au Proxy.

Pour chaque Indicateur, on maintient trois compteurs d'utilisation: l'utilisation dans un Indicateur dérivé (DERIVED) et/ou une Métrique, l'utilisation dans une collecte, et l'utilisation d'espace de stockage. Ces trois compteurs servent notamment de critères pour déterminer les modifications autorisées sur un Indicateur existant.

Il est parfois souhaitable de proposer à l'utilisateur le remplacement de la valeur brute, généralement numérique, d'un Indicateur ou d'un paramètre par une forme alternative, souvent alphanumérique, plus explicite, par exemple le remplacement d'une adresse IP par le nom de l'Instance. Deux approches sont possibles:
- une approche statique: le choix de la représentation fait partie de la définition du rapport et le serveur envoie la représentation indiquée au client;
- une approche dynamique: le serveur fournit l'ensemble des représentations possibles aux clients qui proposent à l'utilisateur un réglage dynamique de l'affichage à l'aide d'un menu contextuel.

Dans les deux cas, le client indique, de manière optionnelle, au niveau de la collecte, les alternatives à renvoyer pour les valeurs des Indicateurs et des paramètres. Une seule configuration est suffisante puisque tous les Indicateurs d'une collecte ont le même type et les mêmes paramètres.

Chaque DATAslot logique est identifié de manière unique par un triplet *<rate*, *Indicateur, Instance>* dans lequel *rate* est la fréquence de stockage. Les POLLslots dans lesquels <Indicateur, Instance> sont égaux constituent une ligne de consolidation. Chaque emplacement (slot) regroupe les demandes des différentes collectes en terme de nombre d'échantillons et de fréquence de polling. Des demandes d'origine interne, dans le cadre d'optimisations, complètent le triplet précité.

Le nombre d'échantillons à conserver pour chaque emplacement (slot) correspond à la plus grande demande. La fréquence de polling n'est utilisée que par les POLLslots qui constituent des points d'entrée et elle est calculée en prenant le maximum de toutes les demandes pour la ligne de consolidation.

Les DATAslots logiques sont liés par des relations orientées qui guident les flux de données impliqués dans la consolidation des Indicateurs et l'évaluation des Indicateurs dérivés (DERIVED).

En entrée, on conserve le type et le slot de provenance de chaque relation. En sortie, on conserve le slot de destination de chaque relation. Les POLLslots qui n'ont aucune relation en sortie sont des points terminaux pour le flux de données.

Les intervalles de polling et de stockage sont indiqués à l'aide d'un multiple n d'une unité de base. L'accumulation des intervalles est de préférence périodiquement resynchronisée par rapport à une base supérieure.

Les DATAslots logiques et les relations ne sont pas conservés lors de l'arrêt du serveur. Ils sont reconstruits à son démarrage par le démarrage implicite de toutes les collectes actives lors de l'arrêt du serveur.

Les différentes opérations qui concernent directement ou indirectement les DATAslots logiques sont la création, la modification, la destruction, mais également l'arrêt et le démarrage.

Les DATAslots logiques et les relations correspondant à une collecte sont créés lors de son démarrage, qui peut être explicitement demandé lors de la création, et détruits lors de son arrêt, implicite lors de la destruction. La modification n'a d'impact que si la collecte est active.

L'évaluation d'un Indicateur RTbase (cf. figure 5) consiste à calculer un résultat à partir de données d'un UPDATEslot. L'évaluation d'un Indicateur dérivé (DERIVED) consiste comme pour un Indicateur RTbase à calculer un résultat à partir des données d'un UPDATEslot. L'évaluation par consolidation s'effectue par calcul de la moyenne sur un intervalle. Son calcul s'effectue par intégration d'une fonction affine par morceaux. Afin que l'intégration couvre la totalité de l'intervalle, il est nécessaire d'obtenir les valeurs aux limites. Pour cela, on effectue si nécessaire une interpolation avec la dernière valeur de l'intervalle précédent, respectivement la première valeur de l'intervalle suivant. Ces valeurs ne sont pas prises en compte dans le calcul de la qualité de l'information (nombre de mesures utilisées pour le calcul de l'indicateur).

Dans le cas extrême où la valeur sur l'intervalle provient de l'interpolation entre deux points n'appartenant pas à l'intervalle, la qualité (en nombre de points utilisés) est nulle. Si l'interpolation est nécessaire mais que l'on ne dispose pas des données pour l'effectuer, on se résout à effectuer l'intégration sur une partie seulement de l'intervalle.

Le point d'entrée du stockage des données collectées est le couple <Indicateur, Instance>. Pour chaque couple, on entretient un ensemble de combinaisons rencontrées des valeurs des paramètres de l'Indicateur, et pour chaque combinaison un historique de la variation de l'Indicateur. L'historique est réparti dans une liste de DATAslots. Chaque emplacement (slot) est caractérisé par trois informations principales: sa taille logique, sa taille physique et sa résolution.

Le stockage fonctionne de manière cyclique au niveau de chaque emplacement (slot): chaque nouvelle donnée stockée écrase la plus ancienne. Lorsque la valeur d'un Indicateur est quasiment constante et que donc des plages de valeurs constantes existent, il est possible de réduire l'espace de stockage nécessaire à l'aide d'un mécanisme de "copy on write" (stockage de la valeur une seule fois et stockage des références pour les occurrences suivantes) pour les chaînes de caractères et autres données de taille variable.

Par ailleurs, on peut prévoir d'autres formes d'optimisation. Par exemple, dès que trois valeurs successives sont égales, on supprime la valeur intermédiaire. La mise en place effective de ce mécanisme suppose de conserver la taille physique inférieure à la taille logique si celle-ci se révèle suffisante pour stocker sous forme optimisée un nombre d'échantillons égal à la taille logique.

Lorsque des pollings sont arrêtés et/ou supprimés par l'utilisateur, cela se traduit par une diminution de la taille logique de certains POLLslots. Dans le cas le plus extrême, cette taille peut être réduite à zéro.

La taille physique n'est pas immédiatement réduite afin d'éviter la disparition trop brutale des données stockées. On détruit les données à un rythme égal à celui de l'écrasement cyclique. Lorsque la taille physique atteint zéro, le slot est complètement supprimé. Cela n'a aucune conséquence car sa liaison avec un DATAslot logique avait disparu au moment du passage à zéro de sa taille logique.

La résolution des données stockées peut être localement inférieure ou supérieure à la résolution du slot à la suite d'aléas de collecte. Cela est sans conséquence puisque chaque valeur est accompagnée d'une datation.

Le stockage des valeurs s'effectue par exemple par "colonne" entière, c'est à dire que l'on reçoit simultanément et que l'on stocke, référencées par la même datation, les valeurs individuelles correspondant aux différentes combinaisons des valeurs des paramètres.

Le POLLslot est la représentation logique des pollings de chaque couple <Indicateur, Instance> concerné. Il contient les informations suivantes:
- en provenance de l'Indicateur,
   - la liste des variables,
   - la liste des paramètres de chaque variable,
   - le calendrier,
- en provenance de l'Instance,
   - la Vista et le nom de l'Instance,
   - toutes les valeurs de propriété utilisées par le polling, par exemple l'adresse IP et les noms de communauté SNMP,
- en provenance du DATAslot logique,
   - la fréquence de polling,
   - un lien vers le DATAslot logique.

L'ensemble des informations précitées sont figées en dehors d'une modification des collectes par l'utilisateur. Chaque emplacement (slot) contient également l'horodatage et le type de la prochaine action le concernant à effectuer.

La fréquence de polling permet de définir au niveau de chaque POLLslot un échéancier de polling. Chaque action possible doit s'effectuer dans un laps de temps bien délimité relatif à cet échéancier.

En cas d'absence de réponse d'un équipement, on procède à une réémission des requêtes. Celle-ci intervient après un intervalle qui est doublé à chaque nouvelle absence de réponse et divisé par deux en cas de réponse. La valeur initiale et minimale est de 1 s, la valeur maximale dépend de la limite d'émission de la dernière requête d'un polling.

Pour l'implémentation de la gestion calendaire au niveau du polling, il suffit de prendre en compte le calendrier lors du calcul de l'horodatage du prochain polling.

A la fin d'un polling, terminé normalement ou par une erreur, on calcule la date du prochain polling.

Ce mécanisme permet la gestion d'erreurs ponctuelles. En cas de sous-capacité chronique du serveur, ce mécanisme conduit inévitablement à une saturation des processus d'évaluation puisqu'il est plus rapide de créer un UPDATEslottimeout que de le stocker. Il est nécessaire d'implémenter un mécanisme de diminution des fréquences de polling contrôlé conjointement par les threads de polling et les threads d'évaluation.

Une optimisation essentielle au niveau du polling est le traitement global de plusieurs POLLslots qui arrivent à échéance simultanément. Il est nécessaire que les différents POLLslots arrivent à échéance sur la même opération (par exemple, envoi de données, attente d'une donnée) et que tout ou partie des variables proviennent d'une même Instance commune à tous les POLLslots.

Il faut ensuite déterminer si le traitement global procure un gain quelconque. Comme cela ne dépend que des caractéristiques statique des POLLslots, on peut envisager de conserver le résultat une fois déterminé.

En ce qui concerne le polling, le gain recherché est un gain de bande passante au détriment éventuel de la charge de l'unité centrale. Le gain est optimal lorsque les POLLslots ont des variables communes, mais on peut espérer un gain même dans le cas contraire compte tenu du surplus d'information ("overhead") nécessaire à l'encodage d'un paquet réseau si le protocole utilisé permet de demander plusieurs variables dans un même paquet.

Concernant le protocole SNMP, le traitement global ne doit pas conduire à dépasser la taille limite d'un paquet. Ce dépassement est en effet traité pour l'instant comme une erreur et même si un mécanisme de reprise est ultérieurement mis en oeuvre, il est plus coûteux que le gain espéré. Il n'y a cependant aucun risque lorsque les différents POLLslots ont la même liste de variables ou lorsque les variables sont toutes de taille connue.

Un UPDATEslot contient l'ensemble des informations nécessaires à l'évaluation d'un Indicateur RTbase:
- une liste de couples <variable, valeur>, la présence potentielle de variables inutilisées dans l'évaluation devant être prise en compte,
- un horodatage unique, et
- une référence vers le DATAslot logique à utiliser comme point de départ de l'évaluation.

Les UPDATEslots sont créés au niveau des POLLslots par la consolidation des résultats partiels. Une fois complets, ils sont détachés des POLLslots et placés dans une liste globale.

Ceci permet de paralléliser le traitement des résultats du polling n et l'exécution du polling n+1. L'existence d'un point central de regroupement permet une rétroaction sur le polling en cas d'accumulation de résultats non traités.

Les UPDATEslots sont pris en charge par plusieurs routines de test de calcul qui prennent en charge les calculs directs, indirects (propagation) et le stockage des résultats.

La modélisation des Variables mise en oeuvre dans le procédé selon l'invention inclut la modélisation SNMP, mais a été largement étendue pour pouvoir modéliser des variables issues de sources quelconques et être en particulier indépendante des protocoles.

On distingue entre autres les catégories suivantes de paramètres de Variables correspondant à différents cas d'utilisation:
*régulier* Le paramètre correspond à une dimension de la variable. La dimension d'une variable est donc son nombre de paramètres réguliers. Les différentes valeurs possibles sont récupérées lors du polling. Il s'agit de l'utilisation la plus classique.
exemple: ifInOctets [ifIndex]
où ifIndex représente le numéro de l'interface de l'équipement.
*instance* Le paramètre ne correspond plus à une dimension de la variable car sa valeur est unique. Cette valeur est une valeur de propriété de l'Instance à laquelle cet Indicateur est appliqué. Ce n'est pas une propriété intrinsèque du paramètre mais une utilisation possible de tout paramètre de la catégorie régulier.
exemple: ifInOctets{ifIndex=Interface}
où Interface est une propriété de la Vista sur laquelle est défini cet Indicateur.
*inline* La paramètre ne correspond plus à une dimension de la variable car sa valeur est unique. Cette valeur est fixée par l'utilisateur lors de la saisie du nom de variable au sein d'une formule.
exemple: ciscoPingAvgRtt[ciscoPingProtocol=IP]
*automatic* Le paramètre ne correspond plus à une dimension de la variable car sa valeur est unique. Elle est le résultat d'une manipulation interne au logiciel.
exemple: etherStatsPkts[etherStatsIndex=automatic]
*monotonic* Le paramètre est toujours croissant à chaque nouvelle acquisition de données.
*composite* La définition d'un paramètre composite s'effectue indépendamment des formules d'un indicateur. Par contre, son implémentation qui consiste à récupérer une variable supplémentaire et à effectuer une sorte de substitution de paramètre entre la valeur de l'indicateur et celle de la variable s'exprime facilement dans la grammaire:
*exemple:* B[ifIndex/ifDescr,srcAddr,dstAddr] = merge(A[Ifindex,srcAddr, dstAddr], ifDescr[ifIndex])

Pour les besoins du procédé selon l'invention, on a été amené à étendre la notion de fichier MIB (Management Information Base) au delà de l'acception classique (SNMP) pour pouvoir prendre en compte les nouveaux types de variables décrits précédemment. Les fichiers MIB traditionnels utilisant la syntaxe ASN.1 sont trop limités pour exprimer toute la richesse sémantique que l'on souhaite associer aux Variables dès leur définition. De plus, les variables SNMP ne représentent qu'une partie des Variables du procédé selon l'invention. Cependant, ces fichiers MIB traditionnels couvrent une partie non négligeable de la problématique de définition de Variables. Dans la suite, le terme MIB sera utilisé dans son acception étendue telle que définie précédemment.

Une base MIB peut être considérée comme homogène au niveau de la définition des variables et par extension pour leur affichage et/ou leur désignation. Par contre, le mécanisme à mettre en oeuvre pour récupérer la valeur d'une variable diffère d'une variable à l'autre.

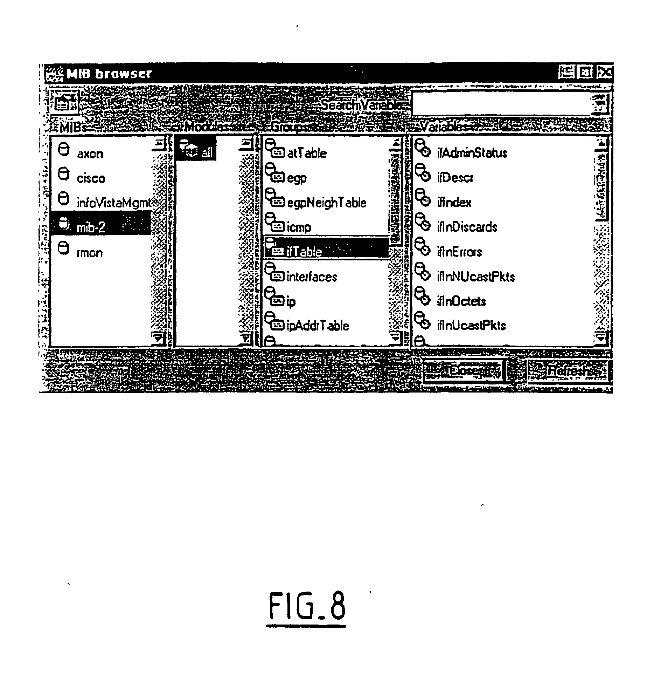

Quand un fichier MIB est chargé, le serveur analyse son contenu et crée une ou plusieurs bases MIB. La base MIB est intégrée dans une arborescence standard d'enregistrement pour la dénomination des objets gérés. Au même moment, le serveur crée des objets pour représenter les noeuds dans la base MIB. Les objets créés par le procédé selon l'invention sont représentés dans une structure arborescente à n niveaux, par exemple quatre: les Variables, les Groupes, les Modules et les Paramètres. Les Variables sont les seuls éléments de l'arborescence nécessaires au fonctionnement du serveur. On peut avantageusement représenter graphiquement une base MIB sous la forme de colonnes juxtaposées (représentation à plat), en référence à la figure 8.

Il existe trois cas typiques d'utilisation des bases MIB:
- un équipement du système d'information supportant le protocole standard SNMP, fourni avec des agents SNMP que le procédé selon l'invention peut interroger pour obtenir des données;
- un équipement du système d'information supportant un protocole spécifique, fourni avec ses propres agents et son propre fichier MIB spécifique;
- un équipement non fourni avec un fichier MIB, pour lequel on peut écrire un fichier MIB en utilisant la syntaxe supportée par le procédé selon l'invention. Ceci sera utilisé notamment pour les données non accessibles via SNMP.

Pour la mise en oeuvre pratique du procédé selon l'invention, les tâches suivantes doivent être envisagées:
- création de fichiers MIBs,
- création de Vistas,
- création de Variables,
- création d'Indicateurs,
- création de Modèles de rapport,
- création d'Instances,
- création de Rapports instanciés (association d'Instances avec un modèle de Rapport),
- modification des Rapports, et
- fonctions d'administration.

Les Variables constituent la base du calcul des Indicateurs. Pour connaître quelles Variables sont disponibles sur un élément du système d'information, on lit préalablement les fichiers MIB définis sur cet élément. Le serveur crée alors une liste des Variables disponibles par analyse des fichiers MIB associés aux bases MIB.

Au cours de l'analyse d'un fichier MIB, le serveur crée les objets MIB, Module, Groupe et Variable, correspondant aux noeuds de la base MIB, en référence à la figure 8.

La configuration d'une source de données externes nécessite, d'une part, d'indiquer au système quelles Variables sont disponibles, sur quel système ces Variables sont disponibles et quel protocole doit être utilisé pour accéder à ces Variables, et d'autre part, de configurer les éléments qui vont opérer avec le système selon l'invention.

Ces opérations sont de préférence réalisées automatiquement. L'objet Groupe de la base MIB indique le protocole d'acquisition associé à chaque variable. Le système tente ensuite d'obtenir l'information requise pour calculer chaque paire Instance-Indicateur sur le Collecteur.

Si l'information requise est une Variable, le procédé selon l'invention effectue un polling sur l'Instance spécifiée. Si le modèle a été correctement configuré par l'utilisateur, l'Instance fournit les données demandées.

Si le modèle n'a pas été correctement configuré, l'Instance interrogée retourne un message d'erreur. Le Serveur conserve en mémoire le fait que la paire Instance-Indicateur est invalide, et le Collecteur est refusé.

Le Collecteur représente un ensemble de paires Instance-Indicateur. L'état de chaque paire est surveillé par le serveur et est représenté par un objet Etat.

La compilation d'une formule nécessite, dans un exemple d'implémentation pratique, la connaissance du type de l'Indicateur (Indicateur de base ou Indicateur dérivé) et de la Vista associée.

Lorsqu'un client envoie une nouvelle formule au serveur, un évaluateur compile la formule. Cette compilation a pour fonction de vérifier que la formule est conforme à la syntaxe et d'accélérer l'évaluation de la formule. La forme compilée de la formule doit être persistante. Le serveur ne recompile pas les formules à chaque redémarrage. Au cours de la compilation, la formule est représentée par un graphe direct acyclique (DAG) dont les feuilles sont soit des constantes, soit des variables pour les formules d'Indicateurs de base ou des Indicateurs pour les formules d'Indicateurs dérivés.

L'analyseur lexical connaît le type de l'Indicateur auquel appartient la formule en cours de compilation. Il sait donc si un identificateur appartient à l'espace de noms des variables ou à celui des Indicateurs.

Un identificateur peut être soit un identificateur complet, soit un identificateur incomplet. Dans ce cas, la référence est ambiguë et l'interrogation du système d'information peut retourner une liste de variables ou d'Indicateurs. La classe *SMIvariable* et la classe *ISindicator* doivent fournir une méthode d'interrogation de la base qui retourne la liste des objets sélectionnés.

La construction des expressions passe par une sélection de l'opérateur et un calcul du type de l'expression. Les paramètres de l'expression sont sélectionnés en soustrayant des paramètres des opérandes d'un opérateur les paramètres servant à la réduction. Si les opérandes n'ont pas les mêmes paramètres, une relation d'inclusion doit exister entre les différentes listes de paramètres. Les paramètres de la liste de réduction sont soustraits de la liste englobante.

Pour chaque opérande, le compilateur crée un tableau permettant de faire la correspondance entre ses paramètres et les paramètres de la liste englobante.

Le compilateur crée des paramètres dans le système d'information dans le cas des paramètres composites et des alias de paramètres. Le compilateur recopie les types associés plutôt que de partager le type avec le paramètre ou la variable source. Ce choix est fait pour simplifier le déchargement d'objets de la base.

La forme compilée est constituée d'une série d'instructions de code intermédiaire et d'un fichier registre ("register file"). Le fichier registre permet aux instructions de se communiquer leurs résultats. C'est un tableau qui pointe vers des valeurs *(DATAvalue* ou *DATAvalueNP).* Le nombre de registres est déterminé pendant la compilation. C'est une propriété de la formule et de l'Indicateur. Il correspond au nombre d'Instances de la classe *EVALexpr.* Chaque registre a un état (vide ou initialisé) et un Indicateur permettant de savoir si sa valeur peut être détruite. Cette dernière information permet dans certains cas de réutiliser pendant l'évaluation l'objet *DATAvalue* ou *DATAvalueNP* pointé par le registre. Afin de pouvoir initialiser le fichier registre au début de l'évaluation, le compilateur doit construire la liste des registres à initialiser.

Au fur et à mesure de l'analyse de la formule, le compilateur émet des instructions de code intermédiaire. Les opérandes d'une instruction proviennent de trois sources:
- des données *EVALdata* de l'invocation de l'évaluateur,
- des résultats d'autres instructions,
- des constantes générées durant la phase de compilation.

Chaque opérande est accédé à travers un registre qui lui est réservé. Un tableau **arguments_**contient le numéro de registre des arguments de l'opérateur et result_ est le numéro de registre du résultat.

Chaque évaluation d'une formule nécessite l'allocation d'un nouveau fichier registre. Son initialisation se fait en deux étapes:
- initialisation des registres contenant les constantes,
- initialisation des registres accédant aux valeurs de l'*EVALdata*.

Les instructions sont exécutées séquentiellement. Une instruction est exécutée en appelant son opérateur.

Bien sûr, l'invention n'est pas limitée aux exemples qui viennent d'être décrits et de nombreux aménagements peuvent être apportés à ces exemples sans sortir du cadre de l'invention. On peut en outre mettre en oeuvre le procédé de modélisation selon l'invention pour le contrôle de processus industriels, dès lors que ce processus met en oeuvre des composants ou équipements, réseaux et applications logicielles susceptibles de fournir des données en temps réel ou en temps différé qui puissent être traitées de façon analogue à ce qui vient d'être décrit. Par ailleurs, le procédé de modélisation selon l'invention ne doit pas être considéré comme dépendant d'un système particulier de mesure des performances et de suivi de qualité de service tel que celui qui vient d'être décrit uniquement à des fins d'illustration. En particulier, ce procédé de modélisation peut être appliqué autant à des systèmes d'information homogènes qu'hétérogènes.

## Revendications

1. Procédé pour modéliser un système d'information, notamment en vue d'une mesure de performances et d'un suivi de la qualité de service, ce procédé comprenant une modélisation orientée-objet de ce système d'information, chaque élément dudit système d'information étant représenté par une Instance, dans lequel:
- des données relatives à une première Instance sont collectées sur cette Instance ou sur une ou plusieurs autres Instances,
- ces données collectées sont rattachables à cette première Instance via le modèle du système d'information,
- on définit des classes d'objets du système d'information appelées Vistas, chaque Vista comprenant des Propriétés et/ou des Indicateurs, les Instances du système d'information appartenant à une ou plusieurs de ces Vistas,
la modélisation orientée-objet du système d'information comprenant en outre une modélisation d'Indicateurs calculés à partir de Variables représentant des données collectées au sein de ce système d'information,
**caractérisé en ce qu'**un Indicateur contient une pluralité de Formules combinant chacune un ensemble de Variables, et **en ce que** pour chaque Indicateur demandé dans un rapport, on effectue un choix dynamique d'une Formule parmi la pluralité de Formules associées à cet Indicateur.

2. Procédé selon la revendication 1, **caractérisé en ce qu'**il comprend en outre une présélection de Formules en fonction de la nature des Vistas auxquelles appartient l'Instance associée à l'Indicateur modélisé.

3. Procédé selon la revendication 2, **caractérisé en ce qu'**il comprend en outre une étape de vérification dans laquelle on vérifie successivement pour chaque Formule que les données requises par les formules présélectionnées sont disponibles pour calculer ledit Indicateur.

4. Procédé selon la revendication 3, dans lequel l'une au moins des données requises est une Variable,
**caractérisé en ce qu'**il comprend en outre une étape d'interrogation dans laquelle on interroge l'Instance pour déterminer si cette Variable est disponible, et si tel est le cas, on utilise alors ladite Formule considérée comme valide dans le calcul dudit Indicateur.

5. Procédé selon la revendication 4, **caractérisé en ce que**, si à l'issue de l'étape d'interrogation, la Variable n'est pas disponible, on applique les étapes de vérification et d'interrogation successivement à chaque Formule jusqu'à identification d'une Formule valide utilisant des variables disponibles.

6. Procédé selon la revendication 5, **caractérisé en ce que**, en cas de pluralité de Formules utilisant des variables disponibles, on détermine la Formule à retenir en fonction de priorités associées auxdites Formules.

7. Procédé selon l'une des revendications 4 à 6,
**caractérisé en ce qu'**une Formule valide est utilisée automatiquement pour le calcul d'un Indicateur aussi longtemps qu'aucune modification n'est faite sur ledit Indicateur.

8. Procédé selon l'une des revendications 4 à 7,
**caractérisé en ce que**, si une Formule est ajoutée ou modifiée pour le calcul d'un Indicateur, toutes les Formules dans ledit Indicateur sont réexaminées.

9. Procédé selon l'une quelconque des revendications précédentes, **caractérisé en ce que** les modifications des Instances du système d'information sont historisées et conservées.

10. Procédé selon l'une quelconque des revendications précédentes, **caractérisé en ce que** les Indicateurs sont calculés par des techniques de calcul associatif.

11. Procédé selon l'une quelconques des revendications précédentes, **caractérisé en ce qu'**il comprend en outre un processus de stockage historique des Indicateurs.

12. Procédé selon la revendication 11, **caractérisé en ce que** le processus de stockage historique met en oeuvre des techniques d'entreposage de données (data-warehousing).

13. Procédé selon l'une des revendications 11 ou 12, **caractérisé en ce que** les Indicateurs sont stockés dans une base de données objet.

14. Procédé selon l'une quelconque des revendications précédentes, **caractérisé en ce que** la modélisation orientée-objet comprend en outre une modélisation de rapports à générer.

15. Procédé selon l'une quelconque des revendications précédentes, **caractérisé en ce que** les Variables correspondant à des données en provenance de diverses sources de données sont modélisées en utilisant des fichiers MIB étendant la syntaxe du protocole SNMP, en vue d'homogénéiser la définition de sources de données hétérogènes.

16. Procédé selon la revendication 15, **caractérisé en ce que** l'arborescence des MIB est représentée graphiquement sous la forme de colonnes juxtaposées, selon un mode de représentation à plat.

17. Système pour mesurer les performances et suivre la qualité de service d'un système d'information, mettant en oeuvre le procédé de modélisation selon l'une quelconque des revendications précédentes, comprenant:
- des moyens pour réaliser une modélisation orientée-objet du système d'information, chaque élément dudit système d'information étant représenté par une Instance, ces moyens de modélisation orientée-objet étant agencés pour définir des classes d'objets du système d'information appelées Vistas,
- des moyens pour modéliser et collecter des données au sein du système d'information, ces données provenant de diverses sources de données,
- des moyens pour traiter les données collectées et pour calculer des Indicateurs, notamment de qualité de service,
- des moyens pour générer des rapports et/ou graphes à partir de ces Indicateurs, et
- des moyens pour calculer des Indicateurs à partir de Variables représentant des données collectées au sein de ce système d'information;
**caractérisé en ce qu'**il comprend en outre des moyens pour choisir dynamiquement une Formule pour calculer un Indicateur demandé dans un rapport, parmi une pluralité de Formules associées audit Indicateur et combinant chacune un ensemble de Variables.

18. Application du procédé de modélisation selon l'une quelconque des revendications 1 à 16, à la modélisation d'un processus industriel.

## Patentansprüche

1. Insbesondere zur Leistungs- und Qualitätsmessung bestimmtes Verfahren zur Modellierung eines Informationssystems, wobei dieses Verfahren eine objektorientierte Modellierung dieses Informationssystems aufweist und jedes Element des besagten Informationssystems durch eine Instanz repräsentiert wird, in welchem Verfahren:
- die auf eine erste Instanz bezogenen Daten aus dieser bzw. einer oder mehrer anderer Instanzen gewonnen werden,
- diese gewonnen Daten mit dieser ersten Instanz über das Informationssystemmodell verknüpft werden können,
- Vistas genannte Objektklassen des Informationssystems definiert werden, wobei jede Vista Eigenschaften und/oder Indikatoren aufweist und die
Instanzen des Informationssystems zu einer oder mehrer dieser Vistas gehören, das objektorientierte Modellierung des Informationssystem außerdem eine Modellierung von Indikatoren aufweist, welche aus Variablen berechnet werden, die die bei diesem Informationssystem gesammelten Daten repräsentieren, **dadurch gekennzeichnet, dass** ein Indikator eine Mehrzahl von Formeln enthält, welche jede ein Ensemble von Variablen kombiniert, und dass für jeden in einem Bericht geforderten Indikator eine dynamische Auswahl einer Formel unter der Vielzahl diesem Indikator zugeordneten Formeln durchgeführt wird.

2. Verfahren nach Anspruch 1, **dadurch gekennzeichnet, dass** es außerdem eine in Abhängigkeit von der Natur der Vistas, zu denen die dem modellierten Indikator zugeordnete Instanz gehört, eine Vorauswahl von Formeln aufweist.

3. Verfahren nach Anspruch 2, **dadurch gekennzeichnet, dass** es außerdem einen Prüfschritt aufweist, in dem aufeinanderfolgend für jede Formel geprüft wird, ob die für die vorgewählten Formeln erforderlichen Daten zur Berechnung des besagten Indikators disponibel sind.

4. Verfahren nach Anspruch 3, in dem mindestens eine der erforderlichen Daten eine Variable ist, **dadurch gekennzeichnet, dass** es außerdem einen Abfrageschritt aufweist, in dem die Instanz abgefragt wird, um zu bestimmen, ob diese Variable disponibel ist und wenn das der Fall ist, die besagte als gültig betrachtete Formel für die Berechnung des besagten Indikators benutzt wird.

5. Verfahren nach Anspruch 4, **dadurch gekennzeichnet, dass**, wenn am Ende des Abfrageschrittes, die Variable nicht disponibel ist, nacheinanderfolgend die Prüf- und Abfrageschritte auf jede Formel bis zur Identifizierung einer Formel, die gültige, disponible Variablen benutzt, angewendet werden.

6. Verfahren nach Anspruch 5, **dadurch gekennzeichnet, dass,** falls mehrere disponible Variablen benutzende Formeln verwendet werden, die Formel bestimmt wird, welche in Abhängigkeit von den besagten Formeln zugeordneten Prioritäten zu benutzen ist.

7. Verfahren nach irgendeinem der Ansprüche 4 bis 6, **dadurch gekennzeichnet, dass** eine gültige Formel automatisch solange für die Berechnung eines Indikators benutzt wird, wie keine Modifikation an dem besagten Indikator vorgenommen worden ist.

8. Verfahren nach irgendeinem der Ansprüche 4 bis 7, **dadurch gekennzeichnet, dass,** wenn eine Formel für die Berechnung eines Indikators hinzugefügt oder geändert wird, alle Formeln in dem besagten Indikator wieder geprüft werden.

9. Verfahren nach irgendeinem der vorangehenden Ansprüche, **dadurch gekennzeichnet, dass** die Veränderungen der Instanzen des Informationssystems historisch aufbewahrt werden.

10. Verfahren nach irgendeinem der vorangehenden Ansprüche, **dadurch gekennzeichnet, dass** die Indikatoren mit Hilfe von Techniken der assoziativen Kalkulierung berechnet werden.

11. Verfahren nach irgendeinem der vorangehenden Ansprüche , **dadurch gekennzeichnet, dass** es außerdem einen Prozess zur historischen Speicherung der Indikatoren aufweist.

12. Verfahren nach Anspruch 11, **dadurch gekennzeichnet dass** der Prozess zur historischen Speicherung Techniken zur Zwischenspeicherung von Daten (data - warehousing) benutzt.

13. Verfahren nach einem der Ansprüche 11 oder 12, **dadurch gekennzeichnet, dass** die Indikatoren in einer Objektdatenbasis gespeichert werden.

14. Verfahren nach irgendeinem der vorangehenden Ansprüche, **dadurch gekennzeichnet, dass** die objektorientierte Modellierung außerdem eine Modellierung der zu erzeugenden Berichte aufweist.

15. Verfahren nach irgendeinem der vorangehenden Ansprüche, **dadurch gekennzeichnet, dass** die den Daten aus verschiedenen Datenquellen entsprechenden Variablen mit dem Ziel, die Definition der heterogenen Datenquellen zu homogenisieren, dadurch modelliert werden, dass MIB-Dateien, welche die Syntax des SNMP-Protokolls erweitern, benutzt werden.

16. Verfahren nach Anspruch 15, **dadurch gekennzeichnet, dass** die Arboreszenz der MIB graphisch in Form von gegenüberliegenden Spalten nach einem Flach-Darstellungsmodus dargestellt wird.

17. System zur Leistungsmessung und Beobachtung der Qualität eines Informationssystems, welches das Modellierungsverfahren nach irgendeinem der vorangehenden Ansprüche durchführt, wobei es folgendes aufweist:
- Mittel zur Durchführung einer objektorientierten Modellierung des Informationssystems, wobei jedes Element des besagten Informationssystems durch eine Instanz dargestellt wird und diese objektorientierten Modellierungsmittel derart angeordnet sind , dass sie Vistas genannte Objektklassen des Informationssystems definieren,
- Mittel zur Modellierung und Sammlung von Daten beim Informationssystem, wobei diese Daten aus verschiedenen Datenquellen stammen,
- Mittel zur Verarbeitung der gesammelten Daten und zur Berechnung der Indikatoren, insbesondere Qualitätsindikatoren,
- Mittel zur Erzeugung von Berichten und/oder Graphen mit Hilfe dieser Indikatoren, und
- Mittel zur Berechnung von Indikatoren aus Variablen, die die bei diesem Informationssystem gesammelten Daten repräsentieren;
**dadurch gekennzeichnet, dass** es außerdem Mittel zur dynamischen Auswahl einer Formel zur Berechnung eines in einem Bericht geforderten Indikators aufweist, wobei die Auswahl unter einer Vielzahl von diesem Indikator zugeordneten Formeln und durch Kombinierung einer jeden Formel zu einem Ensemble von Variablen erfolgt.

18. Anwendung des Modellierungsverfahrens nach irgendeinem der Ansprüche 1 bis 16 auf die Modellierung eines industriellen Prozesses.

## Claims

1. Process for modelling an information system, in particular in order to measure performances and monitor service quality, this process including object-oriented modelling of this information system, each element of said information system being represented by an Instance, wherein:
- data relating to a first Instance are collected on this Instance or on one or several other Instances,
- these collected data are attachable to this said first Instance via the model of the information system,
- classes of objects of the information system, called Vistas, are defined, each Vista comprising Properties and/or Indicators, the instances of the information system belonging to one or several from these Vistas,
the oriented-object modelling of the information system further comprising a modelling of Indicators computed from Variables representing data collected within this information system, **characterized in that** an Indicator contains a plurality of Formulas each combining a set of Variables, and **in that**, for each Indicator requested in a report, a dynamic choice of a Formula among the plurality of Formulas associated to this Indicator is made.

2. Process according to claim 1, **characterized in that** it further comprises a preselection of Formulas depending on the nature of the Vistas to whom belongs the Instance associated to the modellized Indicator.

3. Process according to claim 2, **characterized in that** it further comprises a verifying step in which it is successively verified for each Formula that the data requested by the preselected Formulas are available in order to compute said Indicator.

4. Process according to claim 3, wherein at least one of the data requested is a Variable, **characterized in that** it further comprises a step of interrogating in which the Instance is interrogated in order to determine if this variable is available, and if so, said Formula, considered as being valid in the computing of the Indicator, is used.

5. Process according to claim 4, **characterized in that**, if at the end of the interrogating step, the Variable is not available, the step of verifying and of successively interrogating are applied to each Formula until identification of a valid Formula using available Variables.

6. Process according to claim 5, **characterized in that**, in case of a plurality of Formulas using available Formulas, the Formula to be retained is determined with regards to priorities associated to said Formulas.

7. Process according to one of claims 4 to 6, **characterized in that** a valid Formula is automatically used for the computing of an Indicator as long as no modification on said Indicator is done.

8. Process according to one of claims 4 to 7, **characterized in that**, if a Formula is added or modified for the computing of an Indicator, all the Formulas in said Indicators are reexamined.

9. Process according to anyone of the preceding claims, **characterized in that** the modifications of the Instances of the information system are historized and stored.

10. Process according to anyone of the preceding claims, **characterized in that** the Indicators are computed by associative computing techniques.

11. Process according to anyone of the preceding claims, **characterized in that** it further comprises a process for historically storing the Indicators.

12. Process according to claim 11, **characterized in that** the history-storage process implements data-warehousing techniques.

13. Process according to any of claims 11 or 12, **characterized in that** the Indicators are stored in an object-database.

14. Process according to anyone of preceding claims, **characterized in that** the oriented-object modelling further comprises modelling reports to be generated.

15. Process according to anyone of preceding claims, **characterized in that** the Variables corresponding to data from various data sources are modelled by use of MIB files extending the syntax of the SNMP protocol, in order to homogenize the definition of heterogeneous data sources.

16. Process according to claim 15, **characterized in that** the arborescence of the MIBs is graphically displayed under the form of juxtaposed columns, according to a flat displaying mode.

17. System for measuring the performances and monitoring the service quality of an information system, implementing the modelling process according to anyone of the preceding claims, including:
- means for performing object-oriented modelling of the information system, each element of said information system being represented by an Instance, said oriented-object modelling means being arranged for defining classes of objects of the information system called Vistas,
- means for modelling and collecting data within the information system, said collected data coming from various data sources,
- means for processing the collected data and for computing Indicators, including service quality Indicators,
- means for generating reports and/or graphs from these Indicators, and
- means for computing Indicators form the Variables representing data collected within this information system,
**characterized in that** it further comprises means for dynamically choosing a Formula to compute an Indicator requested in a report, among a plurality of Formulas associated to said Indicator and each combining a set of Variables.

18. Application of the modelling process according to anyone of claims 1 to 16, to the modelling of an industrial process.
